# EUROPEAN PATENT APPLICATION

(11) **EP 4 596 731 A1**
(43) Date of publication of application: **06.08.2025**
(21) Application number: 23871740.9
(22) Date of filing: 01.09.2023
(51) Int. Cl.: C22B 7/00, C22B 5/02, H01M 10/54

(54) **VALUABLE METAL PRODUCTION METHOD**

(30) Priority: 28.09.2022 JP 2022155194
(71) Applicant: SUMITOMO METAL MINING CO., LTD., Tokyo 105-8716 (JP)
(72) Inventor: MAEBA, Kazunari, Niihama-shi, Ehime 792-0002 (JP)
(74) Representative: Jones, Nicholas Andrew
(86) International application number: PCT/JP2023/032075
(87) International publication number: WO 2024/070500

(57) **Abstract**

Provided is a method which makes it possible to suppress wear of a treatment furnace, and to safely and efficiently collect valuable metals from raw materials including waste lithium-ion batteries and the like. This method is for producing a valuable metal from a raw material including the valuable metal and comprises: a preparation step for preparing a raw material including at least lithium (Li), aluminum (Al), and a valuable metal; a reduction melting step for subjecting the raw material to a reduction melting treatment to obtain a reduced product including a slag and an alloy containing the valuable metal; and a slag separation step for separating the slag from the reduced product to collect the alloy. The preparation step and/or the reduction melting step include adding, to the raw material, a flux containing calcium (Ca), and also adding thereto magnesia (MgO) .

## Description

### TECHNICAL FIELD

The present invention relates to a method for producing a valuable metal from a raw material such as a discarded lithium ion battery.

### BACKGROUND ART

Recently, lithium ion batteries have become popular as secondary batteries which are light and have large output. A well-known lithium ion battery has a structure in which a negative electrode material, a positive electrode material, a separator, and an electrolytic solution are sealed in an outer can.

For example, the outer can is made of a metal such as aluminum (Al) or iron (Fe). The negative electrode material is composed of a negative electrode active material (graphite or the like) fixed to a negative electrode current collector (copper foil or the like). The positive electrode material is composed of a positive active material (lithium nickel oxide, lithium cobalt oxide, or the like) fixed to a positive electrode current collector (aluminum foil or the like). The separator is composed of a porous polypropylene resin film or the like. The electrolytic solution includes an electrolyte such as lithium hexafluorophosphate (LiPF₆).

One of the main applications of lithium ion batteries is in hybrid cars and electric vehicles. Therefore, it is expected that a large amount of mounted lithium ion batteries equipped in vehicles are likely to be discarded in the future as the vehicles reach the end of their life cycles. Moreover, some of lithium ion batteries may be discarded as defective products during production. There is a need to reuse such used batteries or defective batteries generated during production (hereinafter, referred to as "discarded lithium ion batteries" or a "discarded lithium ion battery") as a resource.

As a reusing technique, a pyrometallurgical process has been proposed, in which an entire amount of discarded lithium ion batteries is melted in a high-temperature furnace. The pyrometallurgical process is a method of subjecting crushed and discarded lithium ion batteries to melting treatment, and separating and recovering valuable metals to be recovered, represented by cobalt (Co), nickel (Ni), and copper (Cu), and low-value-added metals represented by iron and aluminum, by utilizing a difference in oxygen affinity between them. In this method, low-value-added metals are oxidized as much as possible to produce a slag, whereas valuable metals are recovered as alloys by reducing their oxidation as much as possible.

For example, Patent Document 1 discloses a method for recovering valuable metals containing nickel and cobalt from a discarded battery of a lithium ion battery containing nickel and cobalt. Specifically, a process has been proposed, which includes a melting step of melting a discarded battery to obtain a molten product, an oxidation step of oxidizing the discarded battery, the step being performed on the molten product or the discarded battery before the melting step, and a slag separation step of separating slag from the molten product and recovering an alloy containing a valuable metal. In the melting step, calcium oxide is added to lower a liquidus temperature of the slag to recover the valuable metal.

### Citation List

### Patent Document

Patent Document 1: Japanese Patent No. 6819827

### DISCLOSURE OF THE INVENTION

### Problems to be Solved by the Invention

However, the technique disclosed in Patent Document 1 still has a problem. For example, in the method disclosed in Patent Document 1, there is a problem that if the liquidus temperature of the slag decreases too much by adding a flux, a refractory material of a furnace wall of a treatment furnace is eroded. When such erosion occurs, there is a risk of treated material leaking outside the furnace, which poses a safety concern and leads to enormous costs for maintaining the refractory material of the furnace wall, and as a result, valuable metals cannot be inexpensively recovered.

The present invention has been proposed in view of such circumstances, and an object thereof is to provide a method capable of safely and efficiently recovering a valuable metal from a raw material including a discarded lithium ion battery or the like while reducing wear of a treatment furnace.

### Means for Solving the Problems

The present inventors have conducted intensive studies. As a result, the present inventors have found that by adding a flux and magnesia (MgO) when a raw material is subjected to a reductive melting treatment, a slag coating layer can be effectively formed on a furnace wall of a treatment furnace, and a highly safe and efficient treatment can be performed by reducing wear of the furnace, thereby completing the present invention.
(1) A first aspect of the present invention is a method for producing a valuable metal from a raw material containing the valuable metal, the method including: a preparation step of preparing a raw material containing at least lithium (Li), aluminum (Al), and a valuable metal; a reductive melting step of subjecting the raw material to a reductive melting treatment to obtain a reduction product, which contains a slag and an alloy containing the valuable metal; and a slag separation step of separating the slag from the reduction product to recover the alloy, in either one or both of the preparation step and the reductive melting step, magnesia (MgO) and a flux containing calcium (Ca) being added to the raw material.
(2) A second aspect of the present invention is the method for producing a valuable metal as described in the first aspect, in which in the reductive melting step, the reductive melting treatment is performed such that a mass ratio of calcium oxide/(aluminum oxide + calcium oxide) is 0.25 or more and 0.33 or less and a mass ratio of lithium oxide/(lithium oxide + aluminum oxide) is 0.25 or more and 0.32 or less in the slag to be produced, and a slag heat temperature is 1400°C or higher and 1600°C or lower.
(3) A third aspect of the present invention is the method for producing a valuable metal as described in the first or second aspect, in which the raw material includes a discarded lithium ion battery.
(4) A fourth aspect of the present invention is the method for producing a valuable metal as described in any one of the first to third aspects, in which a melting furnace used in the treatment in the reductive melting step is provided with a mechanism that cools a furnace wall from outside, and the reductive melting treatment is performed while the furnace wall is cooled by the mechanism.
(5) A fifth aspect of the present invention is the method for producing a valuable metal as described in any one of the first to fourth aspects, the method further including: prior to the reductive melting treatment, an oxidative roasting step of oxidatively roasting the raw material to obtain an oxidatively roasted product, the obtained oxidatively roasted product being subjected to the reductive melting treatment.
(6) A sixth aspect of the present invention is the method for producing a valuable metal as described in any one of the first to fifth aspects, in which a refractory material contained in a melting furnace used in the treatment in the reductive melting step contains magnesia (MgO).

### Effects of the Invention

According to the present invention, a valuable metal can be safely and efficiently recovered from a raw material including a discarded lithium ion battery or the like while reducing wear of a treatment furnace.

### BRIEF DESCRIPTION OF THE DRAWINGS

FIG. 1 is a flow chart illustrating an example of a flow of a method for producing a valuable metal from a discarded lithium ion battery.
FIG. 2 is a state diagram of Al₂O₃-CaO-Li₂O-based slag when magnesia (MgO) is added such that a content thereof in the slag is 5% by mass, and is a diagram in which results of formation of a slag coating layer obtained in examples are plotted.

### PREFERRED MODE FOR CARRYING OUT THE INVENTION

Hereinafter, a specific embodiment of the present invention (hereinafter, referred to as "present embodiment") will be described. The present invention is not limited to the following embodiment, and various modifications can be made within a range that does not change the gist of the present invention.

### <<1. Method for Producing Valuable Metal>>

The method for producing a valuable metal according to the present embodiment is a method for separating and recovering a valuable metal from a raw material containing at least lithium (Li), aluminum (Al), and a valuable metal. Therefore, the method can also be referred to as a method for recovering a valuable metal. The method according to the present embodiment is mainly on the basis of a method using a pyrometallurgical smelting process, but may include a pyrometallurgical smelting process and a hydrometallurgical smelting process.

Specifically, the method according to the present embodiment includes a step of preparing a raw material containing at least lithium (Li), aluminum (Al), and a valuable metal (preparation step); a step of subjecting the raw material to a reductive melting treatment to obtain a reduction product (molten product), which contains a slag and an alloy containing the valuable metal (reductive melting step); and a step of separating the slag from the reduction product to recover the alloy (slag separation step).

In this method, in either one or both of the preparation step and the reductive melting step, magnesia (MgO) and a flux containing calcium (Ca) are added to the raw material.

Preferably, in the reductive melting step, the reductive melting treatment is performed such that a mass ratio of calcium oxide/(aluminum oxide + calcium oxide) is 0.25 or more and 0.33 or less and a mass ratio of lithium oxide/(lithium oxide + aluminum oxide) is 0.25 or more and 0.32 or less in the slag to be produced, and a slag heat temperature is 1400°C or higher and 1600°C or lower.

Here, the valuable metal is one to be recovered and consists of, for example, copper (Cu), nickel (Ni), cobalt (Co), or a combination thereof, and is at least one metal or alloy selected from the group consisting of copper, nickel, cobalt, and a combination thereof. Hereinafter, copper, nickel, and cobalt will be described as examples of valuable metals.

### [Preparation Step]

In the preparation step, a raw material to be treated is prepared. The raw material is one to be treated to produce a valuable metal, and as described above, contains lithium and aluminum, as well as at least one valuable metal from the group consisting of copper, nickel, and cobalt. The raw material may contain these components (Li, Al, Cu, Ni, Co) in a form of metal or in a form of compound such as oxides. Further, the raw material may contain an inorganic component or an organic component other than these components.

The raw material is not particularly limited, and examples thereof include a discarded lithium ion battery, a dielectric material (capacitor), and a magnetic material. Further, the raw material may be in any form suitable for a treatment in the reductive melting step described below. In the preparation step, the raw material may be subjected to a pulverization treatment or the like to obtain a suitable form. Further, in the preparation step, the raw material may be subjected to a heat treatment, a sorting treatment, or the like to remove unnecessary components such as moisture or organic matter.

In the preparation step, a flux containing calcium (Ca) may be added to the raw material. The flux to be added will be described in detail later. In the method according to the present embodiment, the flux is added in either one or both of the preparation step and the reductive melting step.

In the method according to the present embodiment, magnesia (MgO) is added to the raw material separately from the flux. Magnesia can be added in either one or both of the preparation step and the reductive melting step, similar to an addition of the flux. Details of an addition of magnesia will be described later.

### [Reductive Melting Step]

In the reductive melting step, the prepared raw material is charged into a melting furnace, and the raw material is heated and subjected to a reductive melting treatment to obtain a reduction product. The reduction product includes an alloy and a slag separately.

The reductive melting treatment is a treatment in which a raw material is heated and reductively melted in a melting furnace to obtain a reduction product. A purpose of this treatment is to convert low-value-added metals (such as Al) contained in the raw material into oxides, reduce and melt valuable metals (Cu, Ni, and Co), and recover them as an integrated alloy. After the reductive melting treatment, an alloy in a molten state is obtained. When an oxidative roasting treatment described later is performed prior to the reductive melting treatment, the obtained oxidatively roasted product is charged into the melting furnace and heated to be reductively melted. Accordingly, the low-value-added metals (such as Al) oxidized by an oxidative roasting treatment are maintained as oxides, and the valuable metals (Cu, Ni, and Co) are reduced and melted to recover them as an integrated alloy.

In the reductive melting treatment, it is preferable to introduce a reducing agent. Moreover, it is preferable to use carbon and/or carbon monoxide as the reducing agent. Carbon has the ability to easily reduce valuable metals (Cu, Ni, and Co) to be recovered. For example, 2 moles of valuable metal oxides (copper oxide, nickel oxide, and the like) can be reduced with 1 mole of carbon. Further, a reduction method using carbon or carbon monoxide is extremely safer than a method using a metal-reducing agent (for example, a thermite reaction method using aluminum).

As a carbon, artificial graphite and/or natural graphite can be used. If there is no risk of impurity contamination, coal or coke can be used.

The alloy produced by the reductive melting treatment contains valuable metals as described above. Therefore, components containing valuable metals (alloys) and other components can be separated in the reduction product. This is because the low-value-added metals (such as Al) have high oxygen affinity, whereas the valuable metals have low oxygen affinity. For example, aluminum (Al), lithium (Li), carbon (C), manganese (Mn), phosphorus (P), iron (Fe), cobalt (Co), nickel (Ni), and copper (Cu) are generally oxidized in the order of Al > Li > C > Mn > P > Fe > Co > Ni > Cu. That is, aluminum is most easily oxidized, and copper is most resistant to oxidation. Therefore, the low-value-added metals (such as Al) are easily oxidized to a slag, and the valuable metals (Cu, Ni, and Co) are reduced to metals (alloys). In this way, the low-value-added metals and the valuable metals can be efficiently separated into a slag and alloys.

In the reductive melting treatment, a flux containing calcium (Ca) may be added to the raw material. In the method according to the present embodiment, the flux is added in either one or both of the preparation step and the reductive melting step. The flux contains calcium (Ca) as a main component, and examples thereof include calcium oxide (CaO) and calcium carbonate (CaCO₃). However, when a required amount of calcium component is contained in the raw material to be treated, the flux may not be added.

Further, in the method according to the present embodiment, magnesia (MgO) is added to the raw material separately from the flux, and the reductive melting treatment is performed. Magnesia (MgO) can also be added in either one or both of the preparation step and the reductive melting step.

Magnesia (MgO) is mainly used as a material constituting a refractory material of a side wall (furnace wall) of a furnace. Since magnesia increases a melting point of the slag and also increases viscosity of the slag, which may worsen separability between the slag and a metal. Therefore, magnesia has not been added to the raw material in the related art. However, as a result of studies by the present inventors, by adding magnesia to the raw material and performing the reductive melting treatment, the melting point of the slag increases, the magnesia acts to increase an operation temperature, and a slag containing the magnesia (MgO) can be produced. Then, accordingly, the slag can adhere to a surface of the refractory material constituting the side wall of the melting furnace as a coating layer (slag coating layer), which reduces erosion and wear of the refractory material of the furnace wall and enables highly safe treatment. Further, a life of the refractory material can be significantly extended.

In particular, since the method according to the present embodiment is intended for a raw material containing lithium, the slag to be produced contains lithium oxide (Li₂O), and a wear rate of the refractory material constituting the melting furnace is very high. This is because the raw material also contains aluminum, and thus lithium aluminate (LiAlO₂), which has a low melting point and is composed of lithium oxide (Li₂O) and alumina (Al₂O₃), is produced in the slag. Further, when the refractory material is made of magnesia, distribution of magnesia from the refractory material to the slag is more likely to occur, which further wears the refractory material.

In contrast, according to the method of the present embodiment, since the magnesia is added to the raw material together with the flux and the reductive melting treatment is performed, particularly when the refractory material of the melting furnace contains magnesia, the distribution of magnesia from the refractory material to the slag can be reduced, and the wear of the refractory material can be more effectively prevented.

An amount of magnesia to be added is not particularly limited, and it is preferable to add such an amount that a content of magnesia is about 1% by mass or more and 10% by mass or less, and more preferably about 3% by mass or more and 7% by mass or less in the slag to be produced.

The magnesia is not particularly limited as long as it is magnesium oxide (MgO), and clinker (magnesia clinker), which is a burned product, may be used. The magnesia clinker is directly used as a material for the refractory material of the furnace.

In the method according to the present embodiment, it is preferable to perform the reductive melting treatment such that the mass ratio of calcium oxide/(aluminum oxide + calcium oxide) is 0.25 or more and 0.33 or less and the mass ratio of lithium oxide/(lithium oxide + aluminum oxide) is 0.25 or more and 0.32 or less in the slag to be produced.

Lithium (Li) and calcium (Ca) contribute to lowering a melting temperature of the slag. Therefore, in addition to the addition of magnesia, the melting temperature of the slag can be set to, for example, 1600°C or lower by preferably controlling component compositions of the slag to be produced to be in the above range. Accordingly, the slag coating layer can be more efficiently formed, and the treatment can be more safely performed.

Further, since the melting point of the slag does not decrease too much, the slag coating layer can be more efficiently formed between the slag and the refractory material of the furnace wall, which protects the refractory material of the furnace wall and enables stable operation with higher safety.

Furthermore, for example, when the melting temperature (melting point) of the slag is 1500°C, setting the slag heat temperature to 1600°C allows for attainment of a slag having sufficiently low viscosity, enabling efficient separation of the slag and the metal, and increasing a recovery ratio of alloys containing valuable metals.

When the slag contains a large amount of calcium (Ca), if the raw material contains phosphorus, the phosphorus is likely to be removed. This is because phosphorus forms an acidic oxide when oxidized, whereas calcium (Ca) forms a basic oxide when oxidized. Therefore, the larger the amount of calcium (Ca) in the slag to be produced, the more basic the slag composition is, and as a result, the slag comes to easily incorporate phosphorus, facilitating removal of phosphorus.

With respect to the component composition of the slag to be produced, when the mass ratio of calcium oxide/(aluminum oxide + calcium oxide) exceeds 0.33, or when the mass ratio of lithium oxide/(lithium oxide + aluminum oxide) exceeds 0.32, a liquidus temperature of the slag decreases too much, the melting point is, for example, less than 1400°C, and the slag coating layer is less likely to be formed even when the furnace wall is cooled. Here, since the melting point of the obtained alloy composed of copper, nickel, and cobalt is about 1300°C to 1400°C, for example, to perform an operation such that a metal temperature is 1400°C to 1500°C, that is, to apply heat from the slag to the metal, a slag temperature needs to be 1500°C to 1600°C. However, when the melting point of the slag is less than 1400°C, the coating layer cannot be effectively formed.

As described above, to apply heat from the slag to the metal, a temperature of a slag layer located on an upper side in the molten product produced by the reductive melting treatment needs to be higher than that of a metal layer located on a lower side. For this purpose, it is preferable to use, as a melting furnace, a submerged arc furnace capable of maintaining a highest operating temperature of the slag layer, that is, capable of maintaining a high temperature by heating the slag layer itself by immersing an electrode in the slag.

When the mass ratio represented by calcium oxide/(aluminum oxide + calcium oxide) or lithium oxide/(lithium oxide + aluminum oxide) is excessively low, specifically, when the mass ratio is less than 0.25, the liquidus temperature of the slag increases, and the raw material to be melted cannot be sufficiently melted, and the valuable metals cannot be efficiently recovered in some cases.

For this reason, during the reductive melting treatment, it is preferable to perform the treatment such that the mass ratio of calcium oxide/(aluminum oxide + calcium oxide) is 0.25 or more and 0.33 or less and the mass ratio of lithium oxide/(lithium oxide + aluminum oxide) is 0.25 or more and 0.32 or less in the slag. Accordingly, the reductive melting treatment can be performed with high safety and the valuable metals can be recovered at a high recovery ratio, while more effectively reducing the erosion of the refractory material constituting the side wall of the melting furnace.

An amount of a slag component (for example, Al, Li, or Ca) can be easily controlled by adjusting a composition of the raw material or an addition amount of a flux to be added to the raw material. Specifically, for example, to adjust an amount of calcium (Ca) in the slag, the amount can be adjusted by adding a flux containing calcium to a treated product and controlling an addition amount of the flux. As described above, examples of the flux containing calcium include calcium oxide (CaO) and calcium carbonate (CaCO₃). The amounts of lithium and aluminum in the slag can be adjusted by controlling the composition of the raw material prepared in the preparation step.

In the reductive melting treatment, it is preferable that the heat temperature (slag heat temperature) is 1400°C or higher and 1600°C or lower. Moreover, it is more preferable that the slag heat temperature is 1500°C or higher and 1600°C or lower. When the slag heat temperature exceeds 1600°C, thermal energy is wastefully consumed, and refractory materials such as crucibles, bricks, and casters constituting the melting furnace are severely worn, which may reduce productivity. On the other hand, when the slag heat temperature is less than 1400°C, separability between the slag to be produced and the alloy deteriorates, and the recovery ratio of valuable metals may decrease.

As the melting furnace, it is preferable to use a furnace provided with a mechanism that cools the furnace wall from outside by water cooling or the like. By performing the reductive melting treatment while cooling the furnace wall from outside by the cooling mechanism, a temperature of the slag in contact with a surface of the refractory material inside the furnace can be decreased to less than the liquidus temperature of the slag, and the slag coating layer (solidified layer) can be effectively formed on the surface of the refractory material. When the slag coating layer is formed in this manner, the refractory material is protected, and erosion of the refractory material can be more effectively prevented.

Further, as the melting furnace, it is preferable that the refractory material constituting the furnace wall contains magnesia (MgO). Most of the melting furnaces have furnace walls made of a refractory material containing magnesia (MgO). In the method according to the present embodiment, since the reductive melting treatment is performed by adding magnesia to the raw material, the slag to be produced contains magnesia. Therefore, when a melting furnace containing magnesia in the refractory material is used, distribution of magnesia from the refractory material into the slag can be significantly reduced, that is, wear of the refractory material can be more effectively reduced.

In the reductive melting step, an oxidation treatment may be performed as necessary. When an oxidative roasting step described later is provided before the reductive melting step, and the raw material is subjected to an oxidative roasting treatment, there is no need to perform the oxidative treatment in the reductive melting step. However, when oxidation in the oxidative roasting treatment is insufficient or when a further adjustment of a degree of oxidation is intended, an additional oxidation treatment may be performed in the reductive melting treatment or after the reductive melting treatment. By performing the additional oxidation treatment, the degree of oxidation can be more precisely adjusted.

As a method for performing an additional oxidation treatment, a method of blowing an oxidizing agent into a molten product produced by the reductive melting treatment, for example, can be exemplified. Specifically, the oxidation treatment is performed by inserting a metal tube (lance) into a molten product produced in the reductive melting treatment and blowing an oxidizing agent by bubbling. In such a case, a gas containing oxygen, such as air, pure oxygen, or an oxygen-enriched gas can be used as the oxidizing agent.

In the reductive melting treatment, harmful substances such as dust or exhaust gas may be generated. However, the harmful substances can be detoxified by performing a treatment such as a known exhaust gas treatment.

### [Oxidative Roasting Step]

In the method according to the present embodiment, a step of oxidatively roasting the raw material to obtain an oxidatively roasted product (oxidative roasting step) may be further added prior to the reductive melting treatment, if necessary. When the oxidative roasting step is added and the oxidative roasting treatment is performed on the raw material, the obtained oxidatively roasted product is subjected to reductive melting treatment to be reduced and melted.

The oxidative roasting treatment (oxidation treatment) is a treatment in which a raw material is oxidatively roasted into an oxidatively roasted product, and even when carbon is contained in the raw material, the carbon can be effectively oxidized and removed, and integration of alloys of valuable metals in the reductive melting treatment can be promoted. More specifically, in the reductive melting treatment described above, the valuable metals are reduced to form localized molten fine particles. At this time, when carbon is contained in the raw material, the carbon acts as a physical obstacle and prevents the molten fine particles (valuable metals), impairing aggregation and integration of the molten fine particles and separability between the resulting metal (alloy) and slag, which may reduce a recovery ratio of valuable metals. Therefore, by subjecting the raw material to an oxidative roasting treatment prior to the reductive melting treatment, carbon in the raw material can be effectively oxidized and removed, whereby the aggregation and integration of the molten fine particles produced in the reductive melting treatment can be promoted, and the recovery ratio of valuable metals can be further increased.

In the oxidative roasting treatment, the degree of oxidation can be adjusted as follows. That is, as described above, aluminum (Al), lithium (Li), carbon (C), manganese (Mn), phosphorus (P), iron (Fe), cobalt (Co), nickel (Ni), and copper (Cu) are generally oxidized in the order of Al > Li > C > Mn > P > Fe > Co > Ni > Cu. In the oxidative roasting treatment, the treatment is allowed to proceed until an entire amount of aluminum (Al) is oxidized. The treatment may be promoted until a part of iron is oxidized. However, it is preferable to minimize oxidation of cobalt and keep a degree of oxidation to such an extent that cobalt is not recovered as a slag.

When adjusting the degree of oxidation in the oxidative roasting treatment, it is preferable to introduce an appropriate amount of an oxidizing agent. In particular, when a raw material including a discarded lithium ion battery is used, it is preferable to introduce an oxidizing agent for treatment. The lithium ion battery includes metals such as aluminum and iron as exterior materials. Further, an aluminum foil and a carbon material are contained as a positive electrode material and a negative electrode material. Further, in a case of a battery pack, plastic is used as an exterior package. Since all of the above are materials that act as reducing agents, the degree of oxidation can be adjusted within an appropriate range by introducing an oxidizing agent.

The oxidizing agent is not particularly limited as long as the oxidizing agent can oxidize carbon or low-value-added metals (such as Al), and an oxygen-containing gas that is easy to handle, such as air, pure oxygen, or oxygen-enriched gas, is preferable. An introduction amount of the oxidizing agent is about 1.2 times (for example, about 1.15 times to 1.25 times) an amount (chemical equivalent) required for oxidation of each substance to be subjected to the oxidative roasting treatment.

A heat temperature of the oxidative roasting treatment is preferably from 700°C or higher and 1100°C or lower, and more preferably 800°C or higher and 1000°C or lower. By setting the heat temperature to 700°C or higher, oxidation efficiency of carbon can be further increased, and an oxidation time can be shortened. By setting the heat temperature to 1100°C or lower, thermal energy cost can be reduced and efficiency of oxidative roasting can be increased.

The oxidative roasting treatment can be performed using a known roasting furnace. Further, it is preferable to use a furnace (preliminary furnace) different from the melting furnace used in the reductive melting treatment, and to perform the treatment in the preliminary furnace. As a roasting furnace, any type of furnace can be used as long as it is a furnace capable of supplying an oxidizing agent (oxygen or the like) while roasting a pulverized product and performing a treatment inside the furnace. Examples thereof include rotary kilns and tunnel kilns (hearth furnaces) known in the related art.

### [Slag Separation Step]

In the slag separation step, a slag is separated from the reduction product obtained by the reductive melting treatment, and an alloy containing valuable metals is recovered. Since the slag and the alloy have different specific gravities and the slag, which has a lower specific gravity than the alloy, gathers on top of the alloy, the slag and the alloy can be efficiently separated and recovered by gravity separation.

After the slag is separated from the reduction product in the slag separation step and the alloy is recovered, a sulfurization step of sulfurizing the obtained alloy or a pulverization step of pulverizing a mixture of sulfide and alloy obtained in the sulfurization step may be added. Further, the alloy of the valuable metal obtained through such a pyrometallurgical process may be subjected to a hydrometallurgical process. By the hydrometallurgical process, impurities can be removed, and valuable metals (Cu, Ni, and Co) can be separated and refined and each can be recovered. Examples of the treatment in the hydrometallurgical process include known methods such as neutralization treatment and solvent extraction treatment.

As described above, in the method according to the present embodiment, in either one or both of the preparation step and the reductive melting step, magnesia (MgO) and a flux containing calcium (Ca) being added to the raw material, and the raw material is reduced and melted. According to such a method, magnesia can act to increase the operation temperature and a slag containing the magnesia can be produced.

Then, accordingly, the slag can adhere to a surface of the refractory material constituting the furnace wall of the melting furnace as a coating layer (slag coating layer), which reduces erosion and wear of the refractory material of the furnace wall and enables highly safe treatment. Further, the life of the refractory material can be significantly extended.

When the reductive melting treatment is performed using a furnace made of a refractory material containing magnesia as a melting furnace, since magnesia is added to the raw material, a slag containing magnesia is generated, and distribution of magnesia from the refractory material of the melting furnace to the slag, that is, wear of the refractory material can be more effectively reduced.

In the reductive melting treatment, the mass ratio of calcium oxide/(aluminum oxide + calcium oxide) is preferably 0.25 or more and 0.33 or less and the mass ratio of lithium oxide/(lithium oxide + aluminum oxide) is preferably 0.25 or more and 0.32 or less in the obtained slag. Accordingly, the melting temperature of the slag is at least 1600°C or lower, for example, 1500°C or lower, and the viscosity of the slag can be reduced. Then, the reductive melting treatment is preferably performed at a slag heat temperature of 1400°C or higher and 1600°C or lower, preferably 1500°C or higher and 1600°C or lower.

In this way, for example, when the melting temperature (melting point) of the slag is 1500°C, setting the slag heat temperature to 1600°C allows for attainment of a slag having sufficiently low viscosity, enabling efficient separation of the slag and the metal. Further, since the melting point of the slag does not decrease too much, the slag coating layer can be more efficiently formed between the slag and the refractory material of the furnace wall of the melting furnace, which protects the refractory material of the furnace wall and enables stable operation with high safety.

At this time, since the slag heat temperature is preferably 1500°C or higher, the metal temperature is about 1400°C or higher, the operation temperature of the metal can be ensured to be equal to or higher than the metal melting point, and fluidity of the metal can also be maintained. As the obtained alloy, an alloy having a melting point of 1400°C or lower is preferably used.

### <<2. Method for Producing Valuable Metals from Discarded Lithium Ion Battery>>

In the method according to the present embodiment, the raw material to be treated is not limited as long as the raw material contains at least lithium (Li), aluminum (Al), and valuable metals. Among them, it is preferable that the raw material includes a discarded lithium ion battery.

The discarded lithium ion battery contains lithium (Li) and valuable metals (Cu, Ni, and Co), and contains low-value-added metals (Al and Fe) and carbon (C) components. Therefore, by using the discarded lithium ion battery as a raw material, valuable metals can be efficiently separated and recovered. The concept of a discarded lithium ion battery includes not only used lithium ion batteries, but also defective products produced in a production process of a positive electrode material constituting the battery or the like, residual materials during the production process, and waste materials, such as scraps, generated in the production process of lithium ion batteries. Therefore, the discarded lithium ion battery can also be referred to as a lithium ion battery waste material.

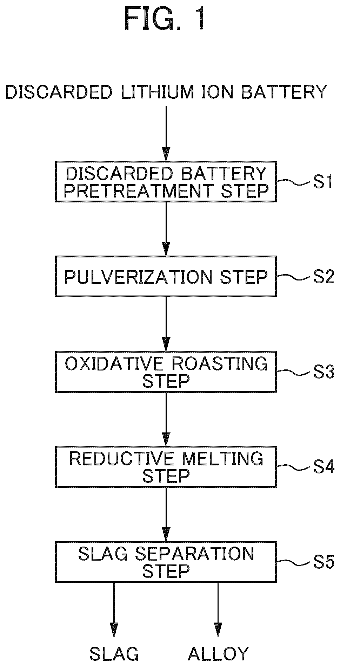

FIG. 1 is a flow chart illustrating an example of a flow of a method for producing a valuable metal from a discarded lithium ion battery. As illustrated in FIG. 1, this method includes a discarded battery pretreatment step S1 of removing an electrolytic solution and an outer can of the discarded lithium ion battery, a pulverization step S2 of pulverizing a content of the discarded battery to obtain a pulverized product, an oxidative roasting step S3 of oxidatively roasting the pulverized product, a reductive melting step S4 of reductively melting the oxidatively roasted product to form an alloy, and a slag separation step S5 of separating a slag from the reduction product obtained by the reductive melting treatment to recover the alloy.

Although not illustrated, after the slag separation step S5, a sulfurization step of sulfurizing the obtained alloy or a pulverization step of pulverizing a mixture of sulfide and alloy obtained in the sulfurization step may be added. The details of each step will be described below.

### (Discarded Battery Pretreatment Step)

The discarded battery pretreatment step (S1) is performed for a purpose of preventing explosion and neutralizing the discarded lithium ion battery, which is the raw material, and removing the outer can. Since the lithium ion battery is a closed system, the battery contains an electrolytic solution and the like inside. If the battery is pulverized in an original state thereof, there is a risk of explosion, which is dangerous, and thus it is preferable to perform discharge treatment or electrolytic solution removal treatment by using some kind of method. Outer cans are often made of aluminum (Al) or iron (Fe), which are metals, and such metal outer cans are relatively easy to recover as they are. In this way, by removing the electrolytic solution and the outer can in the discarded battery pretreatment step S1, safety can be improved, and the recovery ratio of valuable metals (Cu, Ni, and Co) can be increased.

A specific method in the discarded battery pretreatment step S1 is not particularly limited, and examples thereof include a method of physically opening the discarded battery with a needle-shaped blade and removing the electrolytic solution. Another example is a method of roasting the discarded battery for detoxification.

### [Pulverization Step]

In the pulverization step S2, the content of the discarded lithium ion battery is pulverized to obtain a pulverized product. A purpose of the pulverization process in the pulverization step S2 is to increase reaction efficiency in the pyrometallurgical process. The recovery ratio of valuable metals (Cu, Ni, and Co) can be increased by increasing the reaction efficiency.

The specific pulverization method is not particularly limited. The content of the discarded lithium ion battery can be pulverized using a pulverizer known in the related art, such as a cutter-mixer.

When aluminum or iron contained in the outer can is recovered, the pulverized product may be sieved using a sieve shaker. Aluminum can be efficiently recovered because it easily turns into powder through mild pulverization. Further, iron contained in the outer can may be recovered by magnetic separation.

The discarded battery pretreatment step S1 and the pulverization step S2 together correspond to the "preparation step" described above.

### (Oxidative Roasting Step)

In the oxidative roasting step S3, the pulverized product obtained in the pulverization step S2 is oxidatively roasted to obtain an oxidatively roasted product. This step corresponds to the "oxidative roasting step" described above, and details thereof are as described above.

### (Reductive Melting Step)

In the reductive melting step S4, the oxidatively roasted product obtained in the oxidative roasting step S3 is subjected to reductive melting treatment to obtain a reduction product. This step corresponds to the "reductive melting step" described above, and details thereof are as described above.

In particular, in the method according to the present embodiment, magnesia (MgO) and a flux containing calcium (Ca) are added to the raw material, and the raw material is reduced and melted. According to such a method, magnesia can act to increase the operation temperature and a slag containing the magnesia can be produced. Accordingly, the slag can adhere to a surface of the refractory material constituting the furnace wall of the melting furnace as a coating layer (slag coating layer), which reduces erosion and wear of the refractory material of the furnace wall and enables highly safe treatment. Further, the life of the refractory material can be significantly extended.

In the reductive melting treatment, the mass ratio of calcium oxide/(aluminum oxide + calcium oxide) is preferably 0.25 or more and 0.33 or less and the mass ratio of lithium oxide/(lithium oxide + aluminum oxide) is preferably 0.25 or more and 0.32 or less in the obtained slag. Accordingly, the melting temperature of the slag is at least 1600°C or lower, for example, 1500°C or lower, and the viscosity of the slag can be reduced. Then, the reductive melting treatment is preferably performed at a slag heat temperature of 1400°C or higher and 1600°C or lower, preferably 1500°C or higher and 1600°C or lower. Accordingly, the reductive melting treatment can be performed with high safety and the valuable metals can be recovered at a high recovery ratio, while more effectively reducing the erosion of the refractory material.

### (Slag Separation Step)

In the slag separation step S5, the slag is separated from the reduction product obtained in the reductive melting step S4 to recover the alloy. This step corresponds to the "slag separation step" described above, and details thereof are as described above.

After the slag separation step, a sulfurization step or a pulverization step may be added. Further, the obtained valuable metal alloy may be subjected to a hydrometallurgical process. Details of the sulfurization step, the pulverization step, and the hydrometallurgical process are as described above.

### EXAMPLES

Hereinafter, examples of the present invention will be described in more detail. However, the present invention is not limited to the following examples.

### [Regarding Valuable Metals Recovery Treatment Flow (Operation of Each Step)]

Discarded lithium ion batteries containing lithium (Li), aluminum (Al), and valuable metals (Cu, Ni, and Co) were used as a raw material, and a treatment for recovering valuable metals was performed.

### (Discarded Battery Pretreatment Step and Pulverization Step)

First, as the discarded lithium ion batteries, 18650 cylindrical batteries, used square batteries for vehicle applications, and defective products collected in the battery production process were prepared. Then, the discarded lithium ion batteries were immersed in salt water to discharge, and the moisture was then removed, followed by roasting in the air at 260°C to decompose and remove electrolytic solutions and outer cans, thereby obtaining a battery content.

Next, the battery content was pulverized by a pulverizer (trade name: Good Cutter, manufactured by Ujiie Manufacturing Co., Ltd.) to obtain a pulverized product.

### (Oxidative Roasting Step)

Next, the obtained pulverized product was subjected to oxidative roasting in the atmosphere at a heat temperature of 900°C for 180 minutes in a rotary kiln.

### (Reductive Melting Step)

Next, the obtained oxidatively roasted product was prepared such that a mass ratio of lithium oxide/(lithium oxide + aluminum oxide) is a value illustrated in Table 1 below, and graphite powder was added as a reducing agent in the number of moles 0.6 times a total number of moles of valuable metals (Cu, Ni, and Co) (that is, graphite powder in the number of moles 1.2 times the number of moles required for reducing the valuable metals), and calcium oxide (CaO) was further added as a flux. The flux was added and mixed in such an amount that a mass ratio of calcium oxide/(aluminum oxide + calcium oxide) in the slag to be produced by the reductive melting treatment is a value illustrated in Table 1 below.

Further, magnesia (MgO) was added to the raw material (oxidatively roasted product) in such an amount that the content in the slag to be produced is 5% by mass, and mixed.

As a melting furnace for performing the reductive melting treatment, a submerged arc furnace, whose furnace wall can be cooled from outside by a water-cooling jacket, was used. The furnace wall of the melting furnace was made of a refractory material containing magnesia (MgO).

Each test sample was heated to a predetermined reductive melting temperature (slag heat temperature) illustrated in Table 1 below to perform the reductive melting treatment, and valuable metals were alloyed to obtain a reduction product containing an alloy and a slag.

### (Slag Separation Step)

The slag was separated from the obtained reduction product, and the alloy was recovered as a recovered alloy.

### [Regarding Slag Component Analysis]

Components of the slag separated from the reduction product were analyzed as follows. That is, the obtained slag was cooled and then pulverized, and analyzed by fluorescent X-rays.

### (Valuable Metal Recovery Ratio)

A recovery ratio of the valuable metal (Co) was calculated based on the following Equation 1. The component analysis of the recovered alloy was performed by fluorescent X-rays. Valuable Metal Recovery Ratio (%) = (Co weight in recovered alloy)/(Co weight in recovered alloy + Co weight in slag) × 100 ··· (Equation 1)

### [Regarding Evaluation Results]

Table 1 below shows evaluation results of the degree of wear of the refractory material constituting the side wall of the melting furnace when the raw material (oxidatively roasted product) is heated and treated at the slag heat temperature, depending on the presence or absence of the addition of magnesia (MgO) to the raw material. Also shown is a result of a cobalt recovery ratio when the mass ratio of lithium oxide/(lithium oxide + aluminum oxide) and calcium oxide/(aluminum oxide + calcium oxide) in the obtained slag was changed.

The degree of wear of the refractory material was visually confirmed after energization of the submerged arc furnace was stopped after these tests were completed. At that time, it was also confirmed whether a slag coating layer was formed.

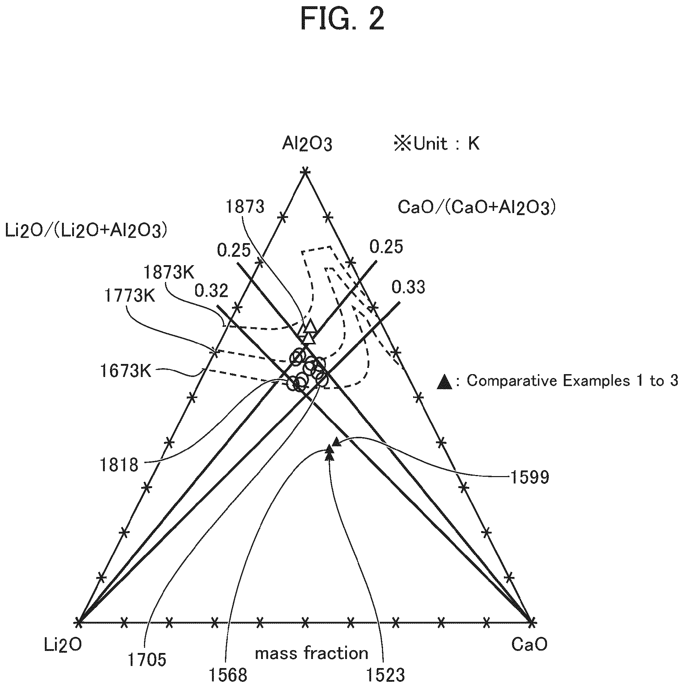

FIG. 2 is a state diagram of Al₂O₃-CaO-Li₂O-based slag when magnesia (MgO) is added such that a content thereof in the slag is 5% by mass, in which results of formation of a slag coating layer obtained in this test are plotted. Broken lines in the state diagram in FIG. 2 indicate liquiduses calculated by thermodynamic calculation software (FactSage)

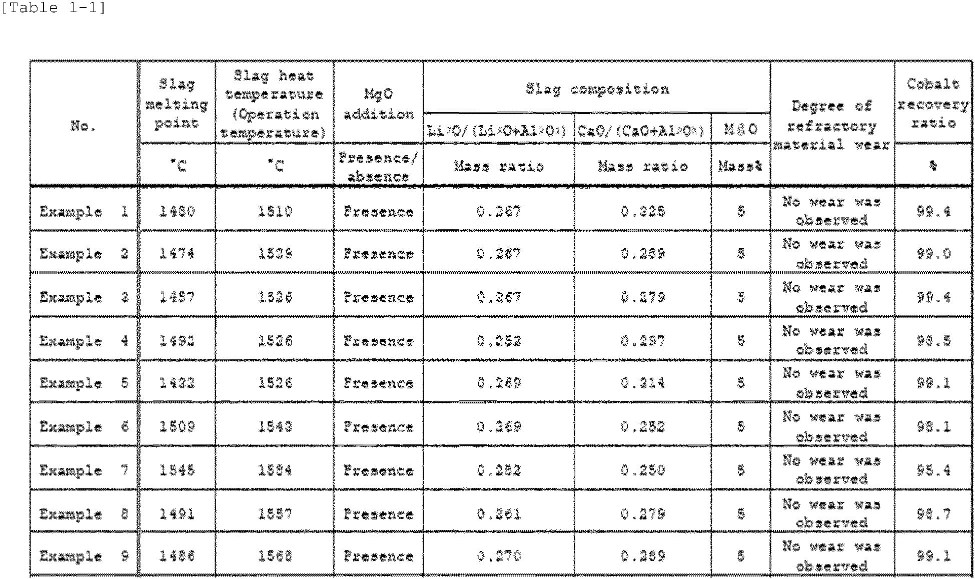

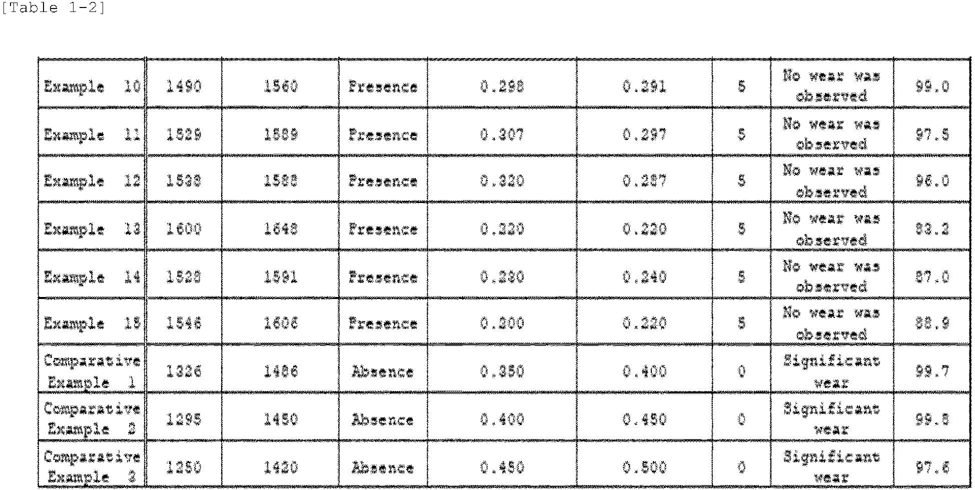

As can be seen from the results in Table 1, no wear of the refractory material was observed in Examples 1 to 15. A slag coating layer was formed on the furnace wall of the melting furnace, protecting the refractory material.

On the other hand, in Comparative Examples 1 to 3, no slag coating layer was formed, the refractory material was not protected, and significant wear of the refractory material was observed. It is considered that the liquidus temperature of the slag in the composition was too low, the estimated slag melting points (estimated slag melting point) were 1326°C in Comparative Example 1, 1295°C in Comparative Example 2, and 1250°C in Comparative Example 3, and as a result, it was estimated that the slag was hardly solidified even when the furnace wall was cooled, and thus the slag coating layer was hardly formed.

From these results, it was found that by adding magnesia to the raw material and performing the reductive melting treatment, a slag containing magnesia can be produced, the slag heat temperature can be increased, the slag coating layer can be effectively formed on the surface of the refractory material, and wear of the refractory material can be reduced.

Among the examples, Examples 1 to 12 showed good results in which the separability between the slag and metal was good and the cobalt recovery rate was 95% or more. Examples 13 to 15 showed results in which the cobalt recovery rate was lower than that in Examples 1 to 12. It is considered that in Examples 13 to 15, the estimated slag melting point in the composition of the produced slag was high, which resulted in the slag not being completely melted, and the high viscosity of the slag led to a slight decrease in the separability between the slag and the metal, and as a result, presence of many small metal particles in the slag caused the cobalt recovery ratio to decrease.

## Claims

1. A method for producing a valuable metal from a raw material containing the valuable metal, the method comprising:
a preparation step of preparing a raw material containing at least lithium (Li), aluminum (Al), and a valuable metal;
a reductive melting step of subjecting the raw material to a reductive melting treatment to obtain a reduction product, which contains a slag and an alloy containing the valuable metal; and
a slag separation step of separating the slag from the reduction product to recover the alloy,
in either one or both of the preparation step and the reductive melting step, magnesia (MgO) and a flux containing calcium (Ca) being added to the raw material.

2. The method for producing a valuable metal according to claim 1, wherein in the reductive melting step, the reductive melting treatment is performed such that a mass ratio of calcium oxide/(aluminum oxide + calcium oxide) is 0.25 or more and 0.33 or less and a mass ratio of lithium oxide/(lithium oxide + aluminum oxide) is 0.25 or more and 0.32 or less in the slag to be produced, and a slag heat temperature is 1400 °C or higher and 1600°C or lower.

3. The method for producing a valuable metal according to claim **1,** wherein the raw material includes a discarded lithium ion battery.

4. The method for producing a valuable metal according to claim **1,** wherein a melting furnace used in the treatment in the reductive melting step is provided with a mechanism that cools a furnace wall from outside, and
the reductive melting treatment is performed while the furnace wall is cooled by the mechanism.

5. The method for producing a valuable metal according to claim 1, further comprising: prior to the reductive melting treatment, an oxidative roasting step of oxidatively roasting the raw material to obtain an oxidatively roasted product, the obtained oxidatively roasted product being subjected to the reductive melting treatment.

6. The method for producing a valuable metal according to claim 1, wherein a refractory material contained in a melting furnace used in the treatment in the reductive melting step contains magnesia (MgO).
